(19) **Europäisches Patentamt European Patent Office Office européen des brevets**

(11) **EP 1 416 650 B1**

(12) **EUROPEAN PATENT SPECIFICATION**

(45) Date of publication and mention
of the grant of the patent:
**12.03.2008 Bulletin 2008/11**

(51) Int Cl.:
*H04B 7/26* (2006.01)

(21) Application number: **03024892.6**

(22) Date of filing: **31.10.2003**

(54) **Initial synchronization searching in mobile communication systems**

Anfangssynchronisationssuche in einem Mobilfunksystem

Recherche de synchronisation initiale dans un système radio mobile

(84) Designated Contracting States:
**AT BE BG CH CY CZ DE DK EE ES FI FR GB GR HU IE IT LI LU MC NL PT RO SE SI SK TR**

(30) Priority: **02.11.2002 KR 2002067669**

(43) Date of publication of application:
**06.05.2004 Bulletin 2004/19**

(73) Proprietor: **LG ELECTRONICS INC.**
**Seoul (KR)**

(72) Inventor: **Lee, Jae Cheol**
**Dongjak-Gu**
**Seoul (KR)**

(74) Representative: **Katérle, Axel et al**
**Wuesthoff & Wuesthoff**
**Patent- und Rechtsanwälte**
**Schweigerstraße 2**
**81541 München (DE)**

(56) References cited:
**EP-A- 0 372 759**          **WO-A-03/039043**

**Description**

**BACKGROUND OF THE INVENTION**

**1. Field of the Invention**

The present invention relates to a mobile communication system and, more particularly, to an initial synchronization searching apparatus and method in a TD-SCDMA (Time Division-Synchronous Code Division Multiple Access) system.

**2. Background of the Related Art**

In general, a Time Division-Synchronous Code Division Multiple Access (TD-SCDMA) communication system is a communication system combining a Narrow Band Time Division Duplexing (NB-TDD) CDMA communication system and a Global System for Mobile Communications GSM system. In the TD-SCDMA communication system, a radio interface, a first layer (Layer 1) between a terminal and a base station is the same as the NB-TDD CDMA system and the other upper layers have the same structure as the GSM system.

Usually, an initial cell searching process of the TD-SCDMA communication system is divided into four steps. The first step is to receive base station information of a cell to which a terminal belongs currently. The second step is to identify a scrambling code and a basic midamble code being used. The third step is to check a position of a broadcast control channel (BCCH). The fourth step is to access information on a common channel including information, that is, system information, transferred through the BCCH.

In the step of receiving the base station information, the terminal searches a downlink pilot time slot (DwPTS) and obtains a downlink synchronization with the base station. For this purpose, the terminal selects one synchronous code from 32 synchronous codes (pilot signals) defined in standards and correlates the selected synchronous code with a baseband input signal (referred to as 'input signal', hereinafter). In this manner, the terminal sequentially correlates 32 synchronous codes with an input signal to search the most similar synchronous code to a DwPTS that the base station has transferred, thereby performing an initial synchronization with the base station.

For the initial synchronization with the base station, the terminal may use at least one or more matching filter. That is, in order to obtain the initial synchronization, the terminal performs correlation by using a 64-tap finite impulse response (FIR) filter corresponding to the length of the DwPTS.

In this respect, however, when the base station selects one of the 32 pilot signals (DwPTS) and transfers it to the terminal, the terminal can not be aware of which DwPTS the base station has transferred. Thus, one fastest way the terminal searches the initial synchronization can be to perform a correlation by using 32 64-tap FIR filters, but, in this case, a hardware of the terminal is complicated in its construction

In addition, in the case of searching the initial synchronization by using a single FIR filter, though the hardware construction may be simple, 32 times of correlation should be performed for the initial synchronization, causing a problem that it takes a long time for searching. Meanwhile, the fact that the filter tap is long when performing the correlation for the initial synchronization searching in the terminal means the terminal should repeatedly perform numerous multiplications and additions

In other words, for obtaining the initial synchronization, a correlator should perform 64 times of multiplications and additions, which is to be performed 32 times for every input signal (I, Q). Thus, unless a calculation speed is faster than a speed of an input signal, a signal of more than 1 sub-frame should be in a memory and then the calculation operation should be repeatedly performed by 32 times. This results in severe power consumption of a system.

EP 372 759 A2 discloses a TDMA communication system in which synchronization is achieved by transmitting an access burst from a mobile terminal and correlating the access burst with a known synchronization sequence at a base station. The mobile terminal transmits the access burst at a nominal subscriber offset timing relative to the base station timing. The base station, detects the beginning of an access burst from an increase in received signal power above a predetermined threshold. Information received a predetermined time after the sensed start of the burst is isolated and treated as information of interest.

WO 03/039043 A1, which is a post-published document, suggests for a mobile terminal to detect peaks in the received power on a synchronization channel in a TDMA communication system comprising mutually synchronized base stations. Each base station has its own synchronization channel transmit timing offset within a synchronization time slot. Through the position of the signal strength peaks in the synchronization slot the terminal can be aware of the timing of the synchronization channel and start a synchronization code search at an optimum time.

It is an object of the present invention to speed up an initial synchronization search in a mobile communication system while permitting reduced complexity and power consumption of an apparatus performing such initial synchronization search.

To achieve the above object, the present invention provides a synchronization searching method according to claim 1 and further provides an apparatus according to claim 7. Preferred embodiments are given in the dependent sub-claims.

In one embodiment, an initial synchronization searching method of a mobile communication system in which an initial synchronization is performed between a terminal and a base station includes: selecting a region for an initial synchronization from an input signal; and obtaining an initial synchronization by correlating the selected region and a synchronous code. Preferably, the accumulating step is performed by a circulation buffer.

In the above embodiment, the region selecting step includes: respectively accumulating input signals of a channel I and a channel Q and obtaining absolute values; adding the two absolute values; and estimating a region showing a remarkable power distribution in a power distribution of the added absolute value of one frame as a candidate region. In this case, the candidate region estimating step includes: searching a region with a remarkable power distribution from the absolute value of the input signal; checking whether a length of the corresponding region corresponds to a search range; and estimating the corresponding region as a candidate region if the length of the region with the remarkable power distribution corresponds to the search range. Preferably, the search range is 64 chips.

In the above embodiment, the initial synchronization obtaining step includes: obtaining a correlation value of each candidate region; and judging that synchronization has been obtained in a corresponding candidate region if a specific correlation value is greater than a certain threshold value.

An initial synchronization apparatus of a mobile communication system may include: first and second accumulation buffer for respectively accumulating signals I and Q; first and second absolute value calculators for obtaining an absolute value from outputs of the first and second accumulation buffers; an adder for adding outputs of the first and second absolute value calculator; an estimator for estimating a candidate region for initial synchronization from the added absolute values; and a synchronization searching unit for obtaining an initial synchronization of a terminal by correlating the estimated candidate region and a synchronous code. Preferably, the accumulation buffer is a circulation buffer.

Preferably, the estimator searches a region with a remarkable power distribution from an absolute value of 1 frame and estimates a region with a length of a power distribution corresponding to the search range as a candidate region. Preferably, the search range is 64 chips.

Preferably, the synchronization searching unit obtains a correlation value by correlating the candidate region and a synchronous code, and if a specific correlation value is greater than a certain threshold value, the synchronization searching unit judges that a synchronization has been obtained in the corresponding candidate region.

## BRIEF DESCRIPTION OF THE DRAWINGS

The invention will be described in further detail with reference to the following drawings wherein:

Figure 1 illustrates a physical channel structure of a general TD-SCDMA or a UMTS-TDD;
Figure 2 illustrates an initial synchronization searching apparatus of a mobile communication system in accordance with an embodiment of the present invention;

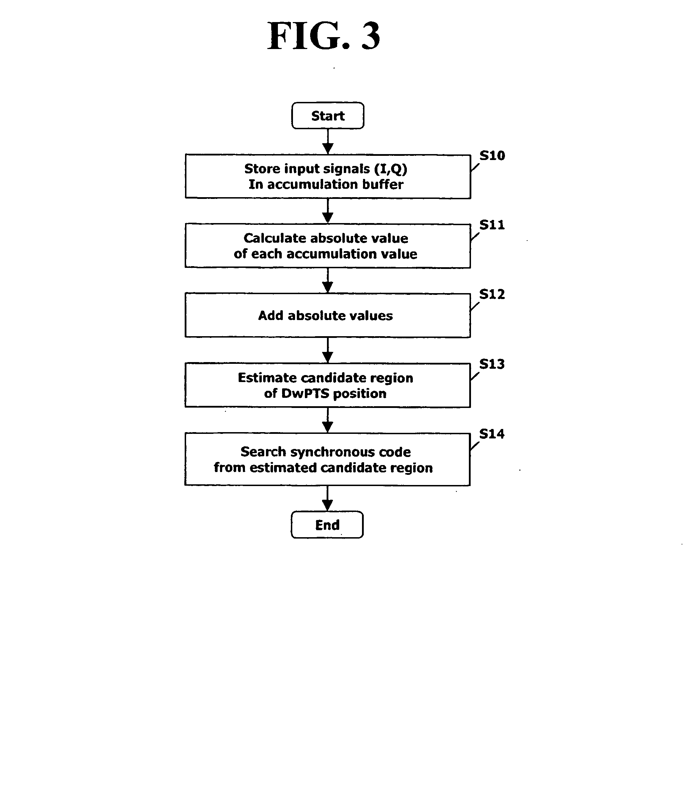

Figure 3 is a flow chart of an initial synchronization searching method of a mobile communication system in accordance with an embodiment of the present invention; and
Figures 4A and 4B illustrate a method for estimating a candidate region from a power distribution of an input signal.

## DETAILED DESCRIPTION OF PREFERRED EMBODIMENTS

In general, a pilot signal of the TD-SCDMA mode or a Universal Mobile Telecommunications System-Time division Duplexing (UMTS-TDD) mode has a characteristic that it is repeated at a specific position of every sub-frame. In contrast, other signals are expressed as random signals. This is requisite in terms of the CDMA. Accordingly, the pilot signal can be used as a synchronous code (Sync-DL) for an initial synchronization between a terminal and a base station.

32 synchronous codes (Sync-DL) with a length of 64 bits are displayed in 3GPP TS 25.223. The base station selects one of the 32 synchronous codes and repeatedly inserts the selected synchronous code to a specific position of every sub-frame, that is, the DwPTS (Downlink Pilot Time Slot) so that the terminal can use it for an initial synchronization operation.

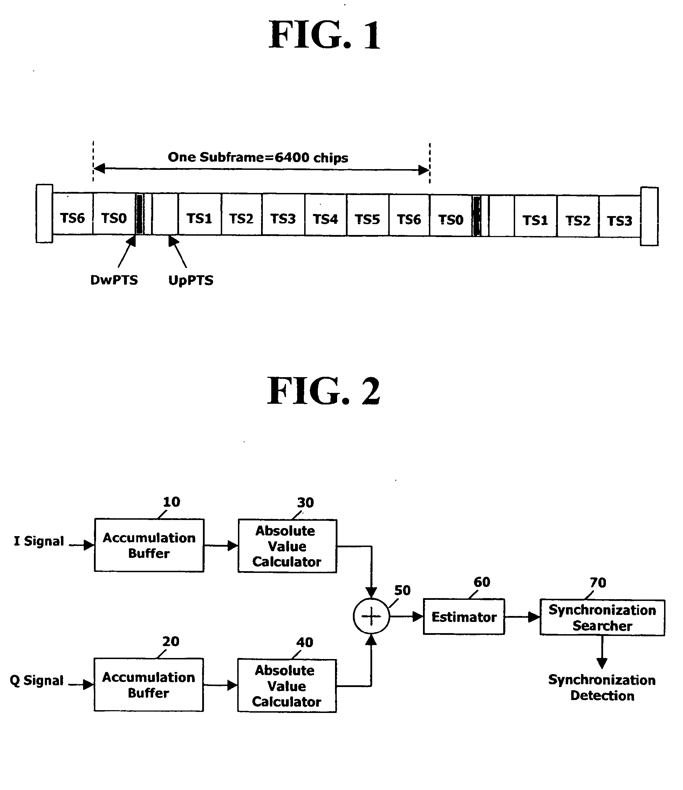

Figure 1 illustrates a physical channel structure of a TD-SCDMA or a UMTS-TDD. As shown in Figure 1, the TD-SCDMA physical channel includes a plurality of subframes. The shadow regions indicate positions of the DwPTS and the other remaining regions indicate various data and control channels. The other remaining regions may include an uplink pilot time slot (UpPTS) and a noise that a neighboring terminal transfers and signals, which have passed a fading channel.

Accordingly, in the TD-SCDMA or UMTS-TDD mode, the terminal correlates an input signal and a synchronous code for an initial synchronization with a base station. In this case, referring back to the conventional art, 32 synchronous codes provided in the terminal are sequentially correlated with the entire input signals to search the most similar synchronous code to DwPTS transferred by the base station, thereby performing an initial synchronization.

In contrast, the present invention proposes a method in which correlation is performed not on the entire input signals but on a specific region of an input signal, so that the initial synchronization of the TD-SCDMA can be proceed simply and quickly. For this purpose, in the present invention, buffers are provided to respectively store input signals I and Q of one sub frame, in which input signals are accumulated for several frames. In this case, only addition is necessary for one sample. When an absolute value of the accumulation values of the input signals stored in the buffers is obtained in a lapse of certain time, average powers of the input signals are shown to be periodic. Thus, assuming that the buffers are the circulation buffers, a signal region having a significant average power exceeding a certain length (e.g., about 60 chips) is searched and selected as a candidate region, and a correlation is performed on the selected candidate region. Those skilled in the art will appreciate the signal region having a significant power can include a relatively high power region when compared to the other regions, or exceeding a threshold or a threshold differential and the like.

Because only addition is performed on the input signals, the overall calculation is very simple. Also, because the candidate region can be estimated very precisely, there typically are not many follow-up calculations. Further, because the processing is not performed in parallel, software and hardware implementation of this process is not complicated.

Figure 2 illustrates an initial synchronization searching apparatus according to an embodiment of the present invention. The apparatus includes: accumulation buffers 10 and 20 for respectively accumulating input signals I and Q; absolute value calculators 30 and 40 for respectively calculating an absolute value of output values of the accumulation buffers 10 and 20; an adder 50 for adding an absolute value of the absolute value calculators 30 and 40; an estimator 60 for estimating a candidate region for searching a position of a downlink pilot signal (DwPTS) by using the addition value of the adder 50; and a synchronization searching unit 70 for performing a correlation on the candidate region estimated by the estimator 60 and obtaining an initial synchronization.

Input signals I and Q are sampled baseband signals, and each accumulating buffer 10 and 20 typically has the size of 6400 chips. If the input signal is a signal oversampled by 'm' times a chip rate of the baseband signal, the size of the accumulation buffers 10 and 20 would be 6400 chips x m, in this example.

Input signals I and Q transmitted by a base station are accumulated in each accumulation buffer 10 and 20 (step S10). Because the accumulation buffers 10 and 20 are circulation buffers, when input signals I and Q are stored to the last storage region, input signals I and Q are stored by being added to the previously stored values from the first storage region. This can be expressed by the following equation (1):

$$\sum I(t\%L) \not\models \sum Q(t\%L) \quad \text{----------------- (1)}$$

wherein 't' is an input sequence number, 'L', the size of the accumulation buffer, is 6400 chips or 6400 chips x m (in the case of oversampling), % indicates a remaining operator. In this case 't' is an integer from 1 to n, and t%L has a value of 0~6400. That is, $\Sigma I(t\%L)$ can be expressed by $I(1\%6400)+I(2\%6400)+I(3\%6400)+...+I(n\%6400)$.

Thus, according to a remaining calculation result, a value I(1) is stored in an address 1 of the accumulation buffer 10 and a value I(2) is stored in an address 2. In this manner, a result value of I(0) is stored in an address 6400, and the next inputted I(1) is accumulatively stored in the address 1.

The absolute value calculators 30 and 40 receive the accumulation values of the accumulation buffers 10 and 20 and calculate absolute values (step S11), and the adder 50 adds absolute values outputted from the absolute value calculators 30 and 40 (step S12). The addition result can be expressed by below equation (2):

$$\left|\sum \dot{I}(t\%L)\right| + \left|\sum O(t\%L)\right| \quad \text{------------------- (2)}$$

When addition operation is performed as described above, assuming a noise signal has zero-mean characteristics, and assuming that UpPTSs between time slots (TS0-TS6) and different terminals are uncorrelated in the TD-SCDMA physical channel, the addition value approaches a zero-mean random noise. Then, regions with a relatively high power distribution appear periodically in one sub-frame. In this case, additional connection of a low pass filter (LPF) to an output terminal of the adder 50 helps to obtain a more certain power distribution.

Accordingly, the estimator 60 receives the output value corresponding to 1 sub-frame (6400 chips) from the adder 50 or from the LPF (in the case that LPF is connected) and estimates a region having a relatively high power distribution as a candidate region of DwPTS (step S13). At this time, a range (W) for estimating the candidate region is preferably 64 chips.

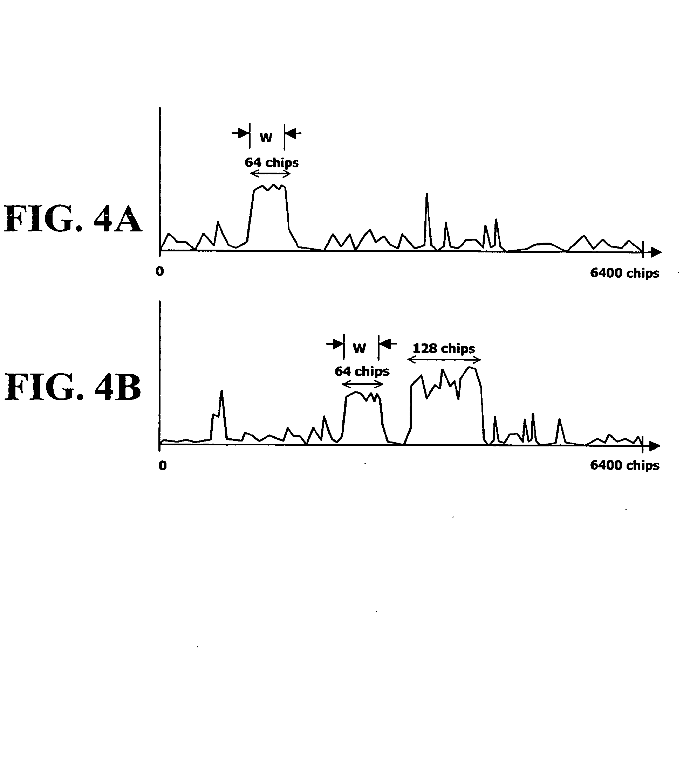

Figures 4A and 4B illustrate a method for estimating a candidate region in a power distribution of a signal outputted from the adder 50 or from the LPF. An input signal including only DwPTS of the base station is illustrated in Figure 4A. A power block similar to the length of 64 chips in the power distribution can be regarded as the position of DwPTS. Accordingly, the estimator 60 estimates the region corresponding to 64 chips as a candidate region of DwPTS.

Figure 4B illustrates an example having an input signal that includes both DwPTS of the base station and UpPTS of a neighboring terminal, of which the UpPTS shows a greater power distribution than the DwPTS. However, as shown in Figure 4B, the length of the power distribution of the UpPTS is 128 chips, which exceeds the appropriate search range (W=64 chips). Accordingly, the UpPTS is not included as a candidate region of the DwPTS. That is, estimator 60 regards only a region with a relatively high power distribution and a size of approximately 64 chips appearing in the input signal as a candidate region.

The synchronization searching unit 70 searches for a position of DwPTS from the candidate region(s) estimated by the estimator 60 (step S14). Thus, the synchronization searching unit 70 correlates the estimated regions and the synchronous code and obtains synchronization of the DwPTS. Specifically, the synchronization searching unit 70 performs the correlation on the candidate region(s), and if the correlation value is greater than a certain threshold value as is known in the art. The synchronization searching unit 70 judges the corresponding candidate region as a DwPTS position, thereby obtaining an initial synchronization.

Because correlation is not performed on an entire input signal but on a specific region of an input signal, complicate calculations required for the initial synchronization of the TD-SCDMA or the UMTS-TDD terminal can be considerably reduced. Therefore, the overall search range is reduced to as much as W from 6400 or 6400xm, so that the searching time can be shortened.

Further, in order for the terminal to be synchronized with the base station, only addition is performed, instead of multiplication and addition as in the conventional art. Thus, the overall calculation amount for obtaining synchronization is reduced. Accordingly, the complexity and power consumption can be reduced in the communication system.

**Claims**

1. A synchronization searching method for use in a mobile communication system, comprising the steps of:

    - determining (S10-S12) a temporal power distribution for an input signal by:
    - accumulating over a plurality of subframes of the input signal, temporally corresponding sample values of an I channel signal obtained during each subframe period;
    - accumulating over the plurality of subframes, temporally corresponding sample values of a Q channel signal obtained during each subframe period;
    - obtaining an absolute value for each accumulated sample value of the I channel signal;
    - obtaining an absolute value for each accumulated sample value of the Q channel signal; and
    - adding temporally corresponding absolute values of the I and Q channel signals;
    - selecting (S13) a candidate signal region having a high power from the determined power distribution; and
    - obtaining (S14) initial synchronization by correlating (S14) the selected candidate signal region and a synchronous code.

2. The method of claim 1, wherein the selecting step (S13) comprises searching in the determined power distribution a relatively high power region when compared to other regions.

3. The method of claim 2, wherein the selecting step (S13) comprises selecting the relatively high power region as the candidate signal region if the relatively high power region has approximately a given size.

4. The method of claim 3, wherein the given size is 64 chips.

5. The method of any one preceding claim, comprising the step of using respective circulation buffers (10, 20) for the I and Q channel signals to perform the accumulation.

6. The method of any one preceding claim, wherein the obtaining step (S14) comprises judging that synchronization has been obtained at the selected candidate signal region if a correlation result value is greater than a threshold value.

7. An apparatus for use in a mobile communication system, comprising:

    - determining means (10, 20, 30, 40, 50) configured to determine a temporal power distribution for an input signal by
- accumulating over a plurality of subframes of the input signal, temporally corresponding sample values of an I channel signal obtained during each subframe period;
- accumulating over the plurality of subframes, temporally corresponding sample values of a Q channel signal obtained during each subframe period;
- obtaining an absolute value for each accumulated sample value of the I channel signal;
- obtaining an absolute value for each accumulated sample value of the Q channel signal; and
- adding temporally corresponding absolute values of the I and Q channel signals;
- selecting means (60) configured to select a candidate signal region having a high power from the determined power distribution; and
- synchronization obtaining means (70) for obtaining initial synchronization by correlating (S14) the selected candidate signal region and a synchronous code.

8. The apparatus of claim 7, wherein the selecting means (60) are configured to search in the determined power distribution a relatively high power region when compared to other regions.

9. The apparatus of claim 8, wherein the selecting means (60) are configured to select the relatively high power region as the candidate signal region if the relatively high power region has approximately a given size.

10. The apparatus of claim 9, wherein the given size is 64 chips.

11. The apparatus of any one of claims 7 to 10, wherein the synchronization obtaining means (70) are configured to judge that synchronization has been obtained at the selected candidate signal region if a correlation result value is greater than a threshold value.

12. The apparatus of any one of claims 7 to 11, wherein the apparatus is a base station.

13. The apparatus of any one of claims 7 to 11, wherein the apparatus is a mobile terminal.

14. The apparatus of any one of claims 7 to 13, wherein the communication system is at least one of a Time Division-Synchronous Code Division Multiple Access communication system and a Universal Mobile Telecommunications System-Time Division Duplexing (UMTS-TDD) communication system.

**Patentansprüche**

1. Synchronisationssuchverfahren zur Verwendung in einem Mobilkommunikationssystem, umfassend die Schritte:

- Ermitteln (S10-S12) einer zeitlichen Leistungsverteilung für ein Eingangssignal durch:
- Aufaddieren zeitlich entsprechender, jeweils in einer Subrahmenperiode erhaltener Abtastwerte eines I-Kanalsignals über mehrere Subrahmen des Eingangssignals,
- Aufaddieren zeitlich entsprechender, jeweils in einer Subrahmenperiode erhaltener Abtastwerte eines Q-Kanalsignals über die mehreren Subrahmen,
- Gewinnen eines Absolutwerts für jeden aufaddierten Abtastwert des I-Kanalsignals,
- Gewinnen eines Absolutwerts für jeden aufaddierten Abtastwert des Q-Kanalsignals und
- Addieren zeitlich entsprechender Absolutwerte des I- und des Q-Kanalsignals,
- Wählen (S13) eines als Kandidat dienenden Signalbereichs hoher Leistung aus der ermittelten Leistungsverteilung
- Erzielen (S14) einer Anfangssynchronisierung durch Korrelieren (S14) des gewählten Kandidatensignalbereichs mit einem Synchroncode.

2. Verfahren nach Anspruch 1, wobei der Wählschritt (S13) das Suchen nach einem im Vergleich zu anderen Bereichen relativ leistungsstarken Bereich in der ermittelten Leistungsverteilung umfasst.

3. Verfahren nach Anspruch 2, wobei der Wählschritt (S13) das Wählen des relativ leistungsstarken Bereichs als Kandidatensignalbereich umfasst, falls der relativ leistungsstarke Bereich annähernd eine gegebene Größe besitzt.

4. Verfahren nach Anspruch 3, wobei die gegebene Größe 64 Chips ist.

**5.** Verfahren nach einem der vorhergehenden Ansprüche, umfassend den Schritt der Verwendung von Umlaufpuffern (10, 20) für das I- bzw. Q-Kanalsignal zur Durchführung der Aufaddierung.

**6.** Verfahren nach einem der vorhergehenden Ansprüche, wobei der Schritt des Erzielens (S14) das Feststellen umfasst, dass eine Synchronisierung für den gewählten Kandidatensignalbereich erhalten wurde, sofern ein Ergebniswert der Korrelation größer als ein Schwellenwert ist.

**7.** Vorrichtung zur Verwendung in einem Mobilkommunikationssystem, umfassend:

- Ermittlungsmittel (10, 20, 30, 40, 50), welche dazu eingerichtet sind, eine zeitliche Leistungsverteilung für ein Eingangssignal zu ermitteln durch
- Aufaddieren zeitlich entsprechender, jeweils in einer Subrahmenperiode erhaltener Abtastwerte eines I-Kanalsignals über mehrere Subrahmen des Eingangssignals,
- Aufaddieren zeitlich entsprechender, jeweils in einer Subrahmenperiode erhaltener Abtastwerte eines Q-Kanalsignals über die mehreren Subrahmen,
- Gewinnen eines Absolutwerts für jeden aufaddierten Abtastwert des I-Kanalsignals,
- Gewinnen eines Absolutwerts für jeden aufaddierten Abtastwert des Q-Kanalsignals und
- Addieren zeitlich entsprechender Absolutwerte des I- und des Q-Kanalsignals,
- Wählmittel (60), welche dazu eingerichtet sind, einen als Kandidat dienenden Signalbereich hoher Leistung aus der ermittelten Leistungsverteilung zu wählen, und
- Synchronisationserzielungsmittel (70) zur Erzielung einer Anfangssynchronisierung durch Korrelieren (S14) des gewählten Kandidatensignalbereichs mit einem Synchroncode.

**8.** Vorrichtung nach Anspruch 7, wobei die Wählmittel (60) dazu eingerichtet sind, in der ermittelten Leistungsverteilung nach einem im Vergleich zu anderen Bereichen relativ leistungsstarken Bereich zu suchen.

**9.** Vorrichtung nach Anspruch 8, wobei die Wählmittel (60) dazu eingerichtet sind, den relativ leistungsstarken Bereich als Kandidatensignalbereich zu wählen, falls der relativ leistungsstarke Bereich annähernd eine gegebene Größe besitzt.

**10.** Vorrichtung nach Anspruch 9, wobei die gegebene Größe 64 Chips beträgt.

**11.** Vorrichtung nach einem der Ansprüche 7 bis 10, wobei die Synchronisationserzielungsmittel (70) dazu eingerichtet sind, die Feststellung zu treffen, dass eine Synchronisierung für den gewählten Kandidatensignalbereich erhalten wurde, falls ein Ergebniswert der Korrelation größer als ein Schwellenwert ist.

**12.** Vorrichtung nach einem der Ansprüche 7 bis 11, wobei die Vorrichtung eine Basisstation ist.

**13.** Vorrichtung nach einem der Ansprüche 7 bis 11, wobei die Vorrichtung ein mobiles Endgerät ist.

**14.** Vorrichtung nach einem der Ansprüche 7 bis 13, wobei das Kommunikationssystem ein TD-SCDMA- (Time Division-Synchronous Code Division Multiple Access) Kommunikationssystem oder/und ein UMTS-TDD- (Universal Mobile Telecommunications System-Time Division Duplexing) Kommunikationssystem ist.

**Revendications**

**1.** Procédé de recherche de synchronisation destiné à être utilisé dans un système de communication mobile, comprenant les étapes consistant à :

- déterminer (S10-S12) une distribution de puissance temporelle pour un signal d'entrée par :

- l'accumulation sur une pluralité de sous-trames du signal d'entrée, des valeurs d'échantillon correspondant temporellement d'un signal de canal 1 obtenu pendant chaque période de sous-trame ;
- l'accumulation sur la pluralité de sous-trames, des valeurs d'échantillon correspondant temporellement d'un signal de canal Q obtenu pendant chaque période de sous-trame ;
- l'obtention d'une valeur absolue pour chaque valeur d'échantillon accumulée du signal de canal I ;
- l'obtention d'une valeur absolue pour chaque valeur d'échantillon accumulée du signal de canal Q ; et

- l'ajout des valeurs absolues correspondant temporellement des signaux des canaux I et Q ;

    - sélectionner (S13) une région de signal candidate ayant une puissance élevée provenant de la distribution de puissance déterminée ; et
    - obtenir (S14) une synchronisation initiale en corrélant (S14) la région de signal candidate sélectionnée et un code synchrone.

**2.** Procédé selon la revendication 1, dans lequel l'étape de sélection (S13) comprend de rechercher dans la distribution de puissance déterminée une région de puissance relativement élevée lorsqu'on la compare aux autres régions.

**3.** Procédé selon la revendication 2, dans lequel l'étape de sélection (S13) comprend de sélectionner la région de puissance relativement élevée en tant que région de signal candidate si la région de puissance relativement élevée a approximativement une taille donnée.

**4.** Procédé selon la revendication 3, dans lequel la taille donnée est 64 bribes.

**5.** Procédé selon l'une quelconque des revendications précédentes, comprenant l'étape consistant à utiliser des mémoires tampons à circulation respectives (10, 20) pour les signaux des canaux I et Q afin de réaliser l'accumulation.

**6.** Procédé selon l'une quelconque des revendications précédentes, dans lequel l'étape d'obtention (S14) comprend de juger que la synchronisation a été obtenue au niveau de la région de signal candidate sélectionnée si une valeur du résultat de corrélation est supérieure à une valeur de seuil.

**7.** Appareil destiné à être utilisé dans un système de communication mobile, comprenant :

    - des moyens de détermination (10, 20, 30, 40, 50) configurés pour déterminer une distribution de puissance temporelle pour un signal d'entrée par

        - l'accumulation sur une pluralité de sous-trames du signal d'entrée, des valeurs d'échantillon correspondant temporellement d'un signal de canal I obtenu pendant chaque période de sous-trame ;
        - l'accumulation sur la pluralité de sous-trames, des valeurs d'échantillon correspondant temporellement d'un signal de canal Q obtenu pendant chaque période de sous-trame ;
        - l'obtention d'une valeur absolue pour chaque valeur d'échantillon accumulée du signal de canal I ;
        - l'obtention d'une valeur absolue pour chaque valeur d'échantillon accumulée du signal de canal Q ; et
        - l'ajout des valeurs absolues correspondant temporellement des signaux des canaux I et Q ;

    - des moyens de sélection (60) configurés pour sélectionner une région de signal candidate ayant une puissance élevée provenant de la distribution de puissance déterminée ; et
    - des moyens d'obtention de synchronisation (70) pour obtenir une synchronisation initiale en corrélant (S14) la région de signal candidate sélectionnée et un code synchrone.

**8.** Appareil selon la revendication 7, dans lequel les moyens de sélection (60) sont configurés pour rechercher dans la distribution de puissance déterminée une région de puissance relativement élevée lorsqu'on la compare aux autres régions.

**9.** Appareil selon la revendication 8, dans lequel les moyens de sélection (60) sont configurés pour sélectionner la région de puissance relativement élevée en tant que région de signal candidate si la région de puissance relativement élevée a approximativement une taille donnée.

**10.** Appareil selon la revendication 9, dans lequel la taille donnée est 64 bribes.

**11.** Appareil selon l'une quelconque des revendications 7 à 10, dans lequel les moyens d'obtention de synchronisation (70) sont configurés pour juger que la synchronisation a été obtenue au niveau de la région de signal candidate sélectionnée si une valeur du résultat de corrélation est supérieure à une valeur de seuil.

**12.** Appareil selon l'une quelconque des revendications 7 à 11, dans lequel l'appareil est une station de base.

**13.** Appareil selon l'une quelconque des revendications 7 à 11, dans lequel l'appareil est un terminal mobile.

**14.** Appareil selon l'une quelconque des revendications 7 à 13, dans lequel le système de communication est au moins un parmi un système de communication à accès multiple par répartition en code synchrone à répartition dans le temps et un système de communication à duplexage par répartition dans le temps d'un système universel de télécommunications avec les mobiles (UMTS-TDD).

# FIG. 1

One Subframe=6400 chips

| TS6 | TS0 | | | TS1 | TS2 | TS3 | TS4 | TS5 | TS6 | TS0 | | | TS1 | TS2 | TS3 |

DwPTS      UpPTS

# FIG. 2

I Signal → **10** Accumulation Buffer → **30** Absolute Value Calculator

Q Signal → **20** Accumulation Buffer → **40** Absolute Value Calculator

→ **50** (+) → **60** Estimator → **70** Synchronization Searcher → Synchronization Detection

# FIG. 3

```
          ┌──────────┐
          │  Start   │
          └──────────┘
               │
               ▼
┌─────────────────────────────┐  S10
│   Store input signals (I,Q)  │
│    In accumulation buffer    │
└─────────────────────────────┘
               │
               ▼
┌─────────────────────────────┐  S11
│    Calculate absolute value  │
│    of each accumulation value│
└─────────────────────────────┘
               │
               ▼
┌─────────────────────────────┐  S12
│      Add absolute values     │
└─────────────────────────────┘
               │
               ▼
┌─────────────────────────────┐  S13
│    Estimate candidate region │
│       of DwPTS position      │
└─────────────────────────────┘
               │
               ▼
┌─────────────────────────────┐  S14
│    Search synchronous code   │
│  from estimated candidate region │
└─────────────────────────────┘
               │
               ▼
          ┌──────────┐
          │   End    │
          └──────────┘
```

FIG. 4A

FIG. 4B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 372759 A2

- WO 03039043 A1